# EUROPÄISCHE PATENTANMELDUNG

(11) **EP 2 946 943 A1**
(43) Veröffentlichungstag der Anmeldung: **25.11.2015**
(21) Anmeldenummer: 14168836.6
(22) Anmeldetag: 19.05.2014
(51) Int. Cl.: B60B 33/00, A45C 5/14

(54) **Lenkrolle für eine rollbare Vorrichtung, insbesondere für ein Gepäckstück**

(71) Anmelder: RIMOWA GmbH, 50829 Köln (DE)
(72) Erfinder: Morszeck, Dieter, 50678 Köln (DE)
(74) Vertreter: Von Kreisler Selting Werner - Partnerschaft von Patentanwälten und Rechtsanwälten mbB

(57) **Zusammenfassung**

Bei einer Lenkrolle (4) für eine rollbare Vorrichtung (1), insbesondere für ein Gepäckstück, mit einer Lenkrollenachse (6), die mit einem ersten Ende (8) an der rollbaren Vorrichtung (1) drehfest befestigbar ist, einem Lenkrollenkörper (12), der eine Aufnahme (26) für das zweite Ende (10) der Lenkrollenachse (6) aufweist, wobei der Lenkrollenkörper (12) um die Lenkrollenachse (6) verschwenkbar ist, ist vorgesehen, dass zwischen Lenkrollenkörper (12) und Lenkrollenachse (6) ein Dämpfungselement (14, 15) angeordnet ist.

## Beschreibung

Die Erfindung betrifft eine Lenkrolle für eine rollbare Vorrichtung, insbesondere für ein Gepäckstück nach dem Oberbegriff des Anspruchs 1.

Es sind Lenkrollen für rollbare Vorrichtungen, insbesondere für Gepäckstücke bekannt, die zumindest eine Lenkrollenachse aufweisen, die mit einem ersten Ende an der rollbaren Vorrichtung drehfest befestigt ist. Ferner weisen die Lenkrollen einen Lenkrollenkörper auf, der eine Aufnahme für ein zweites Ende der Lenkrollenachse aufweist, wobei der Lenkrollenkörper um die Lenkrollenachse verschwenkbar ist. Die Gepäckstücke, insbesondere Trolleykoffer können vier von solchen Lenkrollen aufweisen, so dass diese Gepäckstücke auf einfache Art und Weise auf Rollen transportiert werden können.

Bei den bisher bekannten Lenkrollen für Gepäckstücke besteht jedoch der Nachteil, dass die Gepäckstücke auch über unebene Flächen gerollt werden, z. B. Pflastersteine. Die bisher bekannten Lenkrollen haben dabei den Nachteil, dass diese beim Rollen sehr laute Geräusche abgeben.

Der vorliegenden Erfindung liegt daher die Aufgabe zugrunde, eine Lenkrolle zu schaffen, bei der die Geräusche beim Rollen einer mit mindestens einer Lenkrolle ausgestatteten rollbaren Vorrichtung reduziert sind.

Zur Lösung dieser Aufgabe dienen die Merkmale des Anspruchs 1.

Die Erfindung sieht in vorteilhafter Weise vor, dass zwischen Lenkrollenkörper und Lenkrollenachse ein Dämpfungselement angeordnet ist.

Dieses Dämpfungselement hat den Vorteil, dass die auftretenden Geräusche reduziert sind. Der Lenkrollenkörper muss sich, um ein Verschwenken der Lenkrolle zu gewährleisten, um die Lenkrollenachse drehen können. Daher existiert ein Spiel zwischen Lenkrollenkörper und Lenkrollenachse. Dies kann dazu führen, dass beim Überfahren von unebenen Untergrund die Lenkrollenachse auf den Lenkrollenkörper aufschlägt und Geräusche produziert. Das Dämpfungselement kann dies verhindern und somit die Geräusche reduzieren.

Das Dämpfungselement kann zumindest zum Teil zwischen einer an dem zweiten Ende der Lenkrollenachse angeordneten Stirnseite der Lenkrollenachse und dem Lenkrollenkörper angeordnet sein. Dadurch kann die axiale Bewegung der Lenkrollenachse in Bezug zu dem Lenkrollenkörper gedämpft werden.

Zwischen dem Dämpfungselement und dem Lenkrollenkörper kann ein erstes Zwischenelement angeordnet sein, das ein Elastizitätsmodul aufweist, das höher ist als das Elastizitätsmodul des Dämpfungselementes.

Dies hat den Vorteil, dass die Lenkrollenachse weiterhin in Bezug zu dem Lenkrollenkörper sehr gut verschwenken kann bzw. der Lenkrollenkörper in Bezug zu der Lenkrollenachse sehr gut verschwenkbar ist. Das Dämpfungselement würde die Verschwenkbarkeit des Lenkrollenkörpers zu der Lenkrollenachse reduzieren. Ein erstes Zwischenelement, das ein Elastizitätsmodul aufweist, das höher ist als das Elastizitätsmodul des Dämpfungselementes, kann diesen Nachteil jedoch beheben. Ferner wird auch die Haltbarkeit des Dämpfungselementes erhöht.

Der Gleitreibungskoeffizient zwischen dem Zwischenelement und der Lenkrollenachse kann kleiner als 0,4 sein, vorzugsweise kleiner als 0,3, besonders bevorzugt kleiner als 0,25 sein.

Das Zwischenelement und das Dämpfungselement können einstückig ausgebildet sein.

Das erste Zwischenelement kann eine Hülse mit Flansch sein, wobei vorzugsweise der Flansch zwischen dem Dämpfungselement und der Lenkrollenachse angeordnet sein.

Das Dämpfungselement kann ein Material aufweisen, das Kautschuk oder Gummi aufweist.

Das Zwischenelement kann Kunststoff aufweisen.

Es kann ein Material, dass PTFE aufweist, zwischen dem ersten Zwischenelement und dem Dämpfungselement und/oder zwischen dem ersten Zwischenelement und der Lenkrollenachse und/oder zwischen dem Dämpfungselement und dem Lenkrollenkörper angeordnet sein.

Auf diese Weise kann der Verschleiß des Dämpfungselementes weiter reduziert werden.

Ferner kann die Gleitreibung zwischen dem ersten Zwischenelement und/oder dem Dämpfungselement und/oder zwischen dem ersten Zwischenelement und der Lenkrollenachse und/oder zwischen Dämpfungselement und dem Lenkrollenkörper reduziet werden. Dies hat auch den Vorteil, dass die Lenkrollenachse besser im Bezug zu dem Lenkrollenkörper bzw. der Lenkrollenkörper in Bezug zu der Lenkrollenachse verschwenken kann.

Der Gleitreibungskoeffizient zwischen dem Material, das PTFE aufweist, und dem Zwischenelement und/oder zwischen dem Material, das PTFE aufweist, und der Lenkrollenachse und/oder zwischen dem Material, das PTFE aufweist, und dem Lenkrollenkörper kann kleiner als 0,4, vorzugsweise kleiner als 0,3, insbesondere kleiner als 0,2 sein.

Das erste Zwischenelement kann das Material, das PTFE aufweist, aufweisen. Das Material, das PTFE aufweist, kann auf dem ersten Zwischenelement und/oder der Lenkrollenachse und/oder dem Lenkrollenkörper und/oder dem Dämpfungselement als Beschichtung angeordnet sein.

Alternativ kann mindestens ein zweites Zwischenelement zwischen dem ersten Zwischenelement und/oder dem Dämpfungselement und/oder zwischen dem ersten Zwischenelement und der Lenkrollenachse und/oder zwischen dem Dämpfungselement und dem Lenkrollenkörper vorgesehen sein, das das Material aufweist, das PTFE aufweist.

Das Dämpfungselement kann zumindest zum Teil zwischen der Mantelfläche der Lenkrollenachse und dem Lenkrollenkörper angeordnet sein.

Das erste Zwischenelement, insbesondere die Hülse mit Flansch, kann in der Aufnahme bzw. Ausnehmung des Lenkrollenkörpers formschlüssig befestigt sein.

Das Dämpfungselement kann durch das Zwischenelement in der Aufnahme bzw. Ausnehmung des Lenkrollenkörpers fixiert sein.

Die Lenkrolle kann mindestens eine, vorzugsweise zwei Laufrollen aufweisen, die um eine Radachse drehbar sind, wobei die Radachse und die Lenkrollenachse orthogonal und versetzt zueinander verlaufen.

Es kann ferner ein Gepäckstück mit mindestens einer Lenkrolle nach einem der Ansprüche 1 - 16 vorgesehen sein, wobei die Lenkrollenachse der mindestens einen Lenkrolle mit dem Gepäckstück drehfest verbunden ist.

An den rollbaren Vorrichtungen können Abstützeinrichtungen für die Lenkrollen vorgesehen sein, die derart angeordnet sind, dass die Lenkrollen mittels der Abstützeinrichtungen abgestützt werden, falls es aufgrund eines zu hohen Gewichts der rollbaren Vorrichtung zur Durchbiegung der Lenkrollenachse kommt. Die Abstützeinrichtung kann auch an einem mit der rollbaren Vorrichtung verbundenen Gehäuse für die Lenkrollen angebracht sein.

Im Folgenden wird unter Bezugnahme auf die Zeichnungen Ausführungsbeispiele der Erfindung näher erläutert:
- Fig. 1: zeigt eine rollbare Vorrichtung,
- Fig. 2: zeigt eine Lenkrolle in der Frontansicht,
- Fig. 3: zeigt eine Lenkrolle der Seitenansicht,
- Fig. 4: zeigt einen Schnitt durch die Lenkrolle gemäß Fig. 3,
- Fig. 5: zeigt ein alternatives Ausführungsbeispiel der Lenkrolle,
- Fig. 6: zeigt ein weiteres alternatives Ausführungsbeispiel der Lenkrolle,
- Fig. 7: zeigt ein weiteres alternatives Ausführungsbeispiel der Lenkrolle.

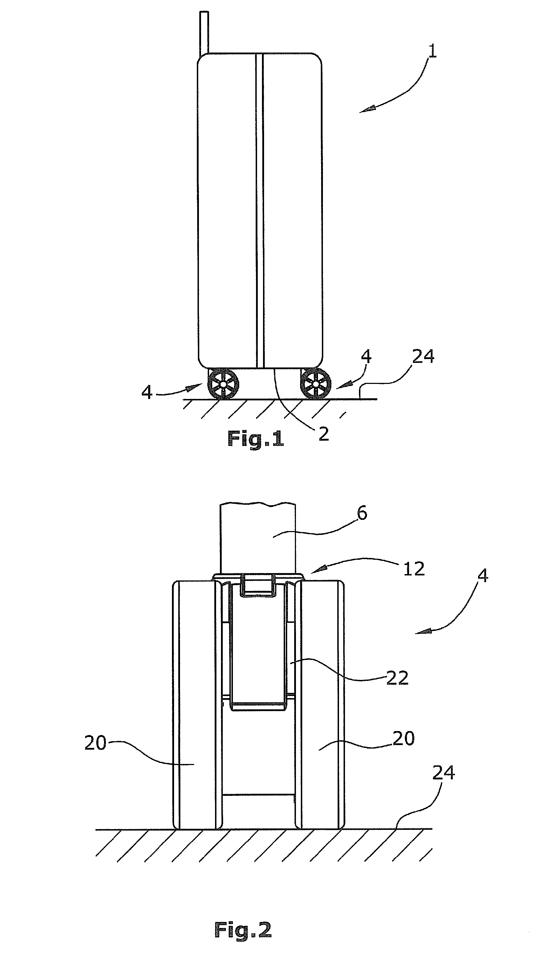

Fig. 1 zeigt eine rollbare Vorrichtung 1. Die dargestellte rollbare Vorrichtung ist ein Gepäckstück, wobei das Gepäckstück ein Koffer ist. Am Boden des Gepäckstücks sind vier Lenkrollen 4 angeordnet. Mittels der Lenkrollen 4 kann das Gepäckstück 1 über einen Untergrund gerollt werden.

Eine rollbare Vorrichtung 1, insbesondere ein Gepäckstück, kann auch weniger oder mehr als vier Lenkrollen aufweisen. Die rollbare Vorrichtung 1 weist jedoch zumindest eine Lenkrolle 4 auf.

Eine erfindungsgemäße Lenkrolle 4 ist in Fig. 2 näher dargestellt. Die Lenkrolle 4 weist mindestens eine, vorzugsweise zwei Laufrollen 20 auf. Die Laufrollen 20 sind um eine Radachse 22 drehbar gelagert. Die Radachse 22 ist in einem Lenkrollenkörper 12 der Lenkrolle 4 gelagert. Die Radachse 22 verläuft vorzugsweise parallel zu dem Boden bzw. zu dem Untergrund 24.

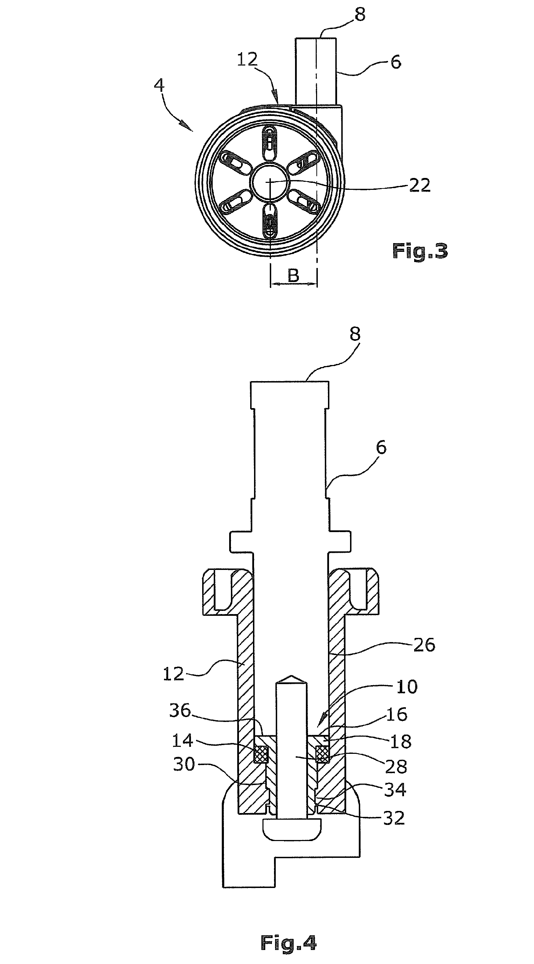

Die Lenkrolle 4 weist eine Lenkrollenachse 6 auf. Die Lenkrollenachse 6 weist ein erstes Ende 8 auf, das vorzugsweise drehfest mit der rollbaren Vorrichtung 1 verbunden ist. Der Lenkrollenkörper 12 kann in Bezug zu der Lenkrollenachse 6 verschwenken. Die Lenkrollenachse 6 und die Radachse 22 verlaufen vorzugsweise orthogonal und versetzt zueinander. Dies kann aus Fig. 3 entnommen werden, die die Lenkrolle in der Seitenansicht dargestellt. Die Lenkrollenachse 6 und die Radachse 22 sind um dem Abstand B versetzt zueinander angeordnet.

In Fig. 4 ist ein Schnitt durch die Lenkrollenachse 6 und ein Teil des Lenkrollenkörpers 12 dargestellt. Die Lenkrollenachse 6 weist ein zweites Ende 10 auf. Das zweite Ende 10 der Lenkrollenachse 6 ist in einer Aufnahme bzw. Ausnehmung 26 des Lenkrollenkörpers 12 angeordnet.

Zwischen dem Lenkrollenkörper 12 und der Lenkrollenachse 6 ist ein Dämpfungselement 14 angeordnet. Das Dämpfungselement 14 ist zwischen dem Lenkrollenkörper 12 und einer an dem zweiten Ende 10 der Lenkrollenachse 6 angeordneten Stirnseite 16 der Lenkrollenachse 6 angeordnet. Mittels dieses Dämpfungselementes 14 können Schläge der Lenkrollenachse 6 insbesondere in axialer Richtung, auf den Lenkrollenkörper 12 reduziert bzw. gedämpft werden.

Die Lenkrollenachse 6 ist mittels einer Schraube 28 mit dem Lenkrollenkörper 12 verbunden. Zwischen dem Dämpfungselement 14 und der Lenkrollenachse 6 kann ein erstes Zwischenelement 18 angeordnet sein. Das erste Zwischenelement 18 besteht im dargestellten Ausführungsbeispiel aus einer Hülse mit einem Flansch, wobei die Hülse mit dem Flansch einstückig miteinander verbunden sind. Auch das Dämpfungselement 14 und das erste Zwischenelement 18 können einstückig miteinander verbunden sein.

Das hülsenförmige Teil bzw. die Hülse des ersten Zwischenelementes 18 ist in eine Bohrung 30 des Lenkrollenkörpers 12 eingeführt. Das hülsenförmige Teil des Zwischenelementes weist einen ringförmigen Vorsprung 32 auf. Auch die Bohrung 30 des Lenkrollenkörpers 12 weist einen ringförmigen Vorsprung 34 auf. Der ringförmige Vorsprung 32 des ersten Zwischenelementes 18 und der ringförmige Vorsprung 34 des Lenkrollenkörpers 12 greifen bei in der Bohrung 30 eingestecktem erstem Zwischenelement 18 ineinander, so dass das erste Zwischenelement formschlüssig mit dem Lenkrollenkörper 12 verbunden ist.

Durch die formschlüssige Verbindung des ersten Zwischenelementes 18 mit dem Lenkrollenkörper 12 kann das Dämpfungselement 14 an dem Lenkrollenkörper 12 fixiert bzw. befestigt werden.

Das erste Zwischenelement 18 weist ein Elastizitätsmodul auf, das höher ist als das Elastizitätsmodul des Dämpfungselementes 14. Auf diese Weise ermöglicht das erste Zwischenelement 18 ein vereinfachtes Verschwenken zwischen der Lenkrollenachse 6 und dem Lenkrollenkörper 12. Der Gleitreibungskoeffizient zwischen dem ersten Zwischenelement 18 und der Lenkrollenachse 6 ist kleiner als 0,4, vorzugsweise kleiner als 0,3, insbesondere kleiner als 0,2.

Das erste Zwischenelement 18 kann Kunststoff aufweisen. Das Dämpfungselement 14 kann ein Material aufweisen, das Kautschuk oder Gummi aufweist.

Das erste Zwischenelement 18 kann eine Beschichtung 36 aufweisen, die ein Material aufweist, dass PTFE aufweist. Die Beschichtung ist vorzugsweise auf der Seite des ersten Zwischenelementes 18 angeordnet, die in Richtung der ersten Lenkrollenachse 6 weist.

Alternativ oder zusätzlich kann das Zwischenelement 18 eine Beschichtung auf der Seite aufweisen, die dem Dämpfungselement 14 zugewandt ist. Alternativ oder zusätzlich kann auch eine Beschichtung auf der Lenkrollenachse 6 und/oder dem Lenkrollenkörper 12 und/oder dem Dämpfungselement 14 angeordnet sein. Bei der Lenkrollenachse 6 kann die Beschichtung auf der dem ersten Zwischenelement 18 zugewandten Seite angeordnet sein. Der Lenkrollenkörper 12 kann die Beschichtung auf der dem Dämpfungselement 14 zugewandten Seite aufweisen. Das Dämpfungselement 14 kann die Beschichtung auf der dem ersten Zwischenelement 18 und/oder dem Lenkrollenkörper 12 zugewandten Seite angeordnet sein.

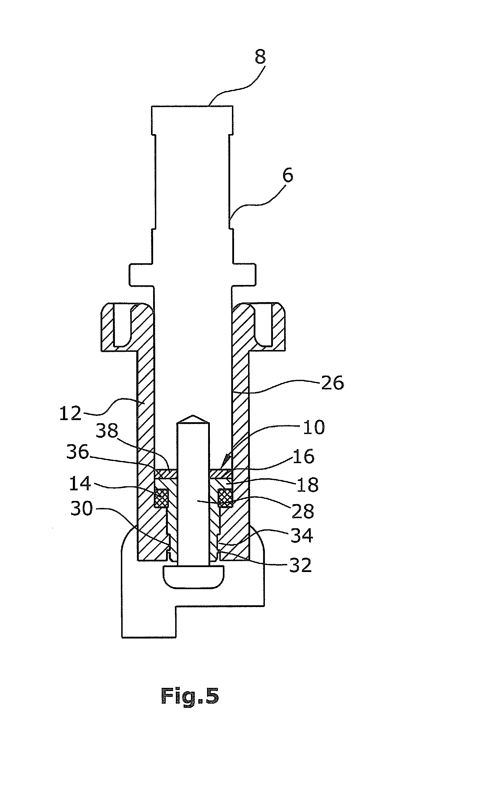

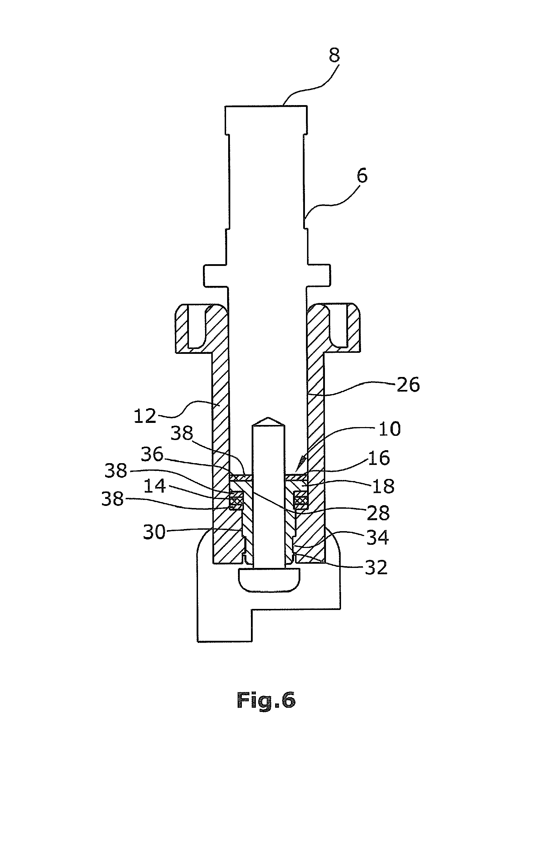

In Fig. 5 ist ein alternatives Ausführungsbeispiel dargestellt, bei dem ein zweites Zwischenelement 38 zwischen dem ersten Zwischenelement 18 und der Lenkrollenachse 6 angeordnet ist. Dieses zweite Zwischenelement 38 kann ein Material aufweisen, dass PTFE aufweist. Alternativ oder zusätzlich kann auch ein zweites Zwischenelement 38 zwischen dem ersten Zwischenelement 18 und dem Dämpfungselement 14 und/oder zwischen dem Dämpfungselement 14 und dem Lenkrollenkörper 12 angeordnet sein. Ein alternatives Ausführungsbeispiel, bei dem das zweite Zwischenelement 38 zwischen dem ersten Zwischenelement 18 und der Lenkrollenachse 6 und zwischen dem Dämpfungselement 14 und dem ersten Zwischenelement 18 und zwischen dem Dämpfungselement 14 und dem Lenkrollenkörper 12 angeordnet ist, ist in Fig. 6 dargestellt.

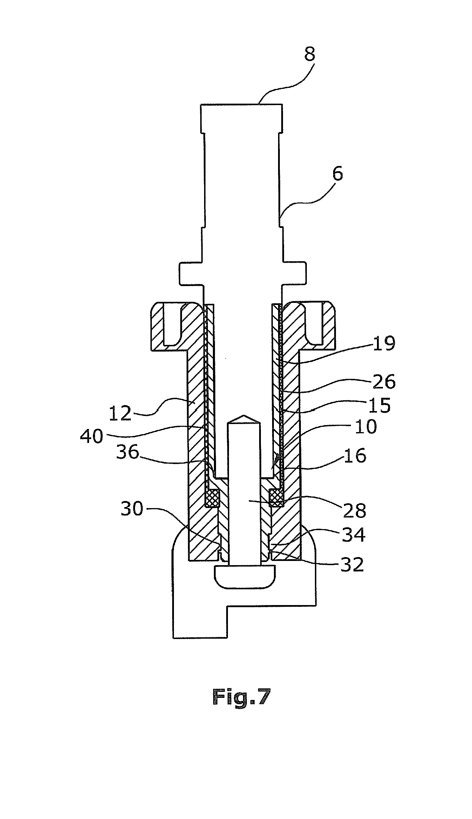

In Fig. 7 ist ein weiteres alternatives Ausführungsbeispiel dargestellt, bei dem das Dämpfungselement 15 zum Teil zwischen der Stirnseite 16 der Lenkrollenachse 6 und dem Lenkrollenkörper 12 als auch zwischen der Mantelfläche 40 der Lenkrollenachse 6 und dem Lenkrollenkörper 12 angeordnet ist. Das erste Zwischenelement 19 weist in Fig. 7 eine solche Form auf, dass es zwischen der Lenkrollenachse 6 und dem Dämpfungselement 15 angeordnet ist.

## Patentansprüche

1. Lenkrolle (4) für eine rollbare Vorrichtung (1), insbesondere für ein Gepäckstück, mit
- einer Lenkrollenachse (6), die mit einem ersten Ende (8) an der rollbaren Vorrichtung (1) drehfest befestigbar ist,
- einem Lenkrollenkörper (12), der eine Aufnahme (26) für das zweite Ende (10) der Lenkrollenachse (6) aufweist, wobei der Lenkrollenkörper (12) um die Lenkrollenachse (6) verschwenkbar ist,
**dadurch gekennzeichnet,**
**dass** zwischen Lenkrollenkörper (12) und Lenkrollenachse (6) ein Dämpfungselement (14, 15) angeordnet ist.

2. Lenkrolle (4) nach Anspruch 1, **dadurch gekennzeichnet, dass** das Dämpfungselement (14, 15) zumindest zum Teil zwischen einer an dem zweiten Ende (10) der Lenkrollenachse (6) angeordneten Stirnseite (16) der Lenkrollenachse (6) und dem Lenkrollenkörper (12) angeordnet ist.

3. Lenkrolle (4) nach Anspruch 1 oder 2, **dadurch gekennzeichnet, dass** zwischen dem Dämpfungselement (14, 15) und der Lenkrollenachse (6) ein erstes Zwischenelement (18, 19) angeordnet ist, das ein Elastizitätsmodul aufweist, das höher ist als das Elastizitätsmodul des Dämpfungselements (14, 15).

4. Lenkrolle (4) nach Anspruch 3, **dadurch gekennzeichnet, dass** der Gleitreibungskoeffizient zwischen dem ersten Zwischenelement (18, 19) und der Lenkrollenachse (6) kleiner als 0,4 ist.

5. Lenkrolle (4) nach Anspruch 3 oder 4, **dadurch gekennzeichnet, dass** das erste Zwischenelement (18, 19) und das Dämpfungselement (14, 15) einstückig ausgebildet sind.

6. Lenkrolle (4) nach einem der Ansprüche 3 bis 5, **dadurch gekennzeichnet, dass** das erste Zwischenelement (18, 19) eine Hülse mit Flansch ist, wobei der Flansch der Hülse zwischen dem Dämpfungselement (14, 15) und der Lenkrollenachse (6) angeordnet ist.

7. Lenkrolle (4) nach einem der Ansprüche 1 bis 6, **dadurch gekennzeichnet, dass** Dämpfungselement (14, 15) ein Material aufweist, das Kautschuk oder Gummi aufweist.

8. Lenkrolle (4) nach einem der Ansprüche 1 bis 7, **dadurch gekennzeichnet, dass** das erste Zwischenelement (18, 19) Kunststoff aufweist.

9. Lenkrolle (4) nach einem der Ansprüche 1 bis 8, **dadurch gekennzeichnet, dass** ein Material, das PTFE aufweist, zwischen dem ersten Zwischenelement (18, 19) und dem Dämpfungselement (14, 15) und/oder zwischen dem ersten Zwischenelement (18, 19) und der Lenkrollenachse (6) und/oder zwischen dem Dämpfungselement (14, 15) und dem Lenkrollenkörper (12) angeordnet ist.

10. Lenkrolle (4) nach Anspruch 9, **dadurch gekennzeichnet, dass** der Gleitreibungskoeffizient zwischen dem Material, das PTFE aufweist, und dem ersten Zwischenelement (18, 19) und/oder zwischen dem Material, das PTFE aufweist, und der Lenkrollenachse (6) und/oder zwischen dem Material, das PTFE aufweist, und dem Lenkrollenköper (12) kleiner als 0,4, vorzugsweise kleiner als 0,3, insbesondere kleiner als 0,2 ist.

11. Lenkrolle (4) nach Anspruch 9 oder 10, **dadurch gekennzeichnet, dass** das Material, das PTFE aufweist, auf dem ersten Zwischenelement (18, 19) und/oder der Lenkrollenachse (6) und/oder dem Lenkrollenköper (12) und/oder dem Dämpfungselement (14, 15) als Beschichtung angeordnet ist.

12. Lenkrolle (4) nach Anspruch 9 oder 10, **dadurch gekennzeichnet, dass** zumindest ein zweites Zwischenelement (38) zwischen dem ersten Zwischenelement (18, 19) und dem Dämpfungselement (14, 15) und/oder zwischen dem ersten Zwischenelement (18, 19) und der Lenkrollenachse (6) und/oder zwischen dem Dämpfungselement (14, 15) und dem Lenkrollenkörper (12) vorgesehen ist, das das Material aufweist, das PTFE aufweist.

13. Lenkrolle (4) nach einem der Ansprüche 3 bis 12, **dadurch gekennzeichnet, dass** das erste Zwischenelement(18, 19), insbesondere die Hülse mit Flansch, in der Ausnehmung (26) des Lenkrollenkörpers (12) formschlüssig befestigt ist.

14. Lenkrolle (4) nach einem der Ansprüche 1 bis 13, **dadurch gekennzeichnet, dass** die Lenkrolle (4) mindestens eine, vorzugsweise zwei Laufrollen (20), aufweist die um eine Radachse (22) drehbar sind, wobei die Radachse (22) und Lenkrollenachse (6) orthogonal und versetzt zueinander verlaufen.

15. Gepäckstück mit mindestens einer Lenkrolle (4) nach einem der Ansprüche 1 bis 14, wobei die Lenkrollenachse (6) der mindestens einen Lenkrolle (4) mit dem Gepäckstück drehfest verbunden ist.
